(19) Europäisches Patentamt
European Patent Office
Office européen des brevets

(11) EP 1 343 033 A2

(12) **EUROPEAN PATENT APPLICATION**

(43) Date of publication:
10.09.2003 Bulletin 2003/37

(51) Int Cl.⁷: **G02B 6/16**

(21) Application number: 03004830.0

(22) Date of filing: 05.03.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 07.03.2002 JP 2002062532

(71) Applicant: **Sumitomo Electric Industries, Ltd.**
**Osaka-shi, Osaka 541-0041 (JP)**

(72) Inventor: **Tsuzaki, Tetsufumi,**
**Yokohama Works of Sumitomo**
**Yokohama-shi, Kanagawa 244-8588 (JP)**

(74) Representative: **HOFFMANN - EITLE**
**Patent- und Rechtsanwälte**
**Arabellastrasse 4**
**81925 München (DE)**

(54) **Dispersion compensating fiber module, and optical communication system**

(57) The present invention relates to a dispersion compensating fiber module excellent in pumping efficiency. The dispersion compensating fiber module includes a dispersion compensating optical fiber for compensating for a chromatic dispersion of an optical transmission line through which signal light propagates, and an optical fiber that can function as a Raman amplification optical fiber. The optical fiber that can function as a Raman amplification optical fiber, in particular, has the characteristics including an FOM Raman of 8 (1/dB/W) or more with respect to signal light having a wavelength of 1,650 nm when pumping light having a wavelength of 1,550 nm is supplied, and a chromatic dispersion with an absolute value of 10 ps/nm/km to 50 ps/nm/km at the wavelength of 1,650 nm.

# Fig.1

**Description**

BACKGROUND OF THE INVENTION

Field of the Invention

The present invention relates to an optical fiber suitable for a Raman amplification medium, an optical component including the optical fiber, a dispersion compensating fiber module which can compensate for a chromatic dispersion in an optical transmission line through which signal light is transmitted and can also perform Raman amplification using the optical fiber, and an optical communication system including the dispersion compensating fiber module.

Related Background Art

An optical communication system performs WDM (Wavelength Division Multiplexing) optical communication of transmitting/receiving large-volume information at high speed by transmitting signal light of a plurality of channels having different wavelengths to an optical transmission line. In general, a single-mode optical fiber used as an optical transmission line has a zero dispersion wavelength near a wavelength of 1.3 μm and a relatively large positive chromatic dispersion in a signal wavelength band such as the C-band (1,530 nm to 1,565 nm) or L-band (1,565 nm to 1,625 nm). When signal light propagates through an optical transmission line having such a chromatic dispersion, the transmission quality deteriorates due to a deterioration in signal waveform, resulting in difficulty in large-volume communication.

In order to realize a large-capacity optical communication system, the absolute value of the cumulative chromatic dispersion in a signal light propagation path must be reduced. More specifically, a dispersion compensating fiber module is used, which has a chromatic dispersion whose sign is different from that of a chromatic dispersion in an optical transmission line in the signal wavelength band. In this case, the absolute value of the total cumulative chromatic dispersion of the optical transmission line and dispersion compensating fiber module becomes smaller than that of the cumulative chromatic dispersion in only the optical transmission line. This suppresses a deterioration in signal waveform and improves the transmission quality. Although such dispersion compensating fiber modules exist in various forms, a form including a dispersion compensating optical fiber is widely known. When a dispersion compensating optical fiber is applied, the absolute value of the total cumulative chromatic dispersion of the optical transmission line and dispersion compensating optical fiber is brought close to zero by properly setting the length of the dispersion compensating optical fiber.

In addition, when a single-mode optical fiber having a positive chromatic dispersion in the signal wavelength band is used as an optical transmission line, a dispersion compensating optical fiber having a negative chromatic dispersion in the signal wavelength band is used. In this case, since the dispersion compensating optical fiber generally has a small effective area, a nonlinear optical phenomenon tends to occur. For this reason, this dispersion compensating optical fiber can also function as a Raman amplification optical fiber which Raman-amplifies signal light upon reception of Raman amplification pumping light. That is, the loss intrinsic to the dispersion compensating optical fiber is compensated for by a Raman amplification gain, and the dispersion compensating optical fiber is reduced in effective loss to zero or has an effective gain.

A dispersion compensating fiber module having both the dispersion compensating function and the Raman amplification function is disclosed in, for example, Japanese Patent Laid-Open No. 11-174504. In the dispersion compensating fiber module disclosed in this reference, dispersion compensation and Raman amplification of signal light in a dispersion compensating optical fiber having a chromatic dispersion of -50 ps/nm/km or less at a signal wavelength are realized by supplying pumping light to the dispersion compensating optical fiber.

SUMMARY OF THE INVENTION

From a study of the above conventional technique, the present inventor found the following problem. The dispersion compensating fiber module disclosed in Japanese Patent Laid-Open No. 11-174504 has low pumping efficiency in Raman amplification, and hence requires a larger power of pumping light to obtain a required gain.

The present invention has been made to solve the above problem, and has as its object to provide a dispersion compensating fiber module excellent in pumping efficiency, an optical fiber that can be suitably used as a signal light propagation path in this dispersion compensating fiber module, an optical component including the optical fiber, and an optical communication system including the dispersion compensating fiber module.

An optical fiber according to the present invention can function as a Raman amplification optical fiber and can be applied to a dispersion compensating fiber module. This optical fiber has an FOM Raman of 8 (1/dB/W) or more with respect to signal light having a wavelength of 1,650 nm when pumping light having a wavelength of 1,550 nm is supplied, and a chromatic dispersion of 10 ps/nm/km to 50 ps/nm/km in absolute value at a wavelength of 1,650 nm.

The optical fiber according to the present invention preferably has an effective area of 15 μm$^2$ or less with respect to light having a wavelength of 1,550 nm. In addition, the optical fiber according to the present invention preferably has a Raman gain coefficient of 0.005 (1/Wm) or more and a nonlinear coefficient of 20 (1/W/km) or more.

In order to facilitate adjustment of the dispersion value of a dispersion compensating fiber module to which an optical fiber according to the present invention can be applied, the absolute value of the chromatic dispersion at a wavelength of 1,650 nm is preferably 15 ps/nm/km to 40 ps/nm/km, and more preferably 20 ps/nm/km to 30 ps/nm/km. In addition, a dispersion slope at a center wavelength in a signal wavelength band is preferably -0.3 $ps/nm^2/km$ to +0.1 $ps/nm^2/km$.

The optical fiber having the above structure can be applied to a dispersion compensating fiber module, and such a dispersion module (a dispersion compensating fiber module according to the present invention) includes the above optical fiber (an optical fiber according to the present invention) and a dispersion compensating optical fiber having a chromatic dispersion whose sign is opposite to that of the chromatic dispersion of the optical transmission line in a signal wavelength band.

An optical communication system according to the present invention includes an optical transmission line (including a repeating transmission line disposed between repeaters) for transmitting signal light, which is laid between an optical transmitter and an optical receiver, and the above dispersion compensating fiber module.

Note that when the optical fiber according to the present invention is applied to an optical component, it can be used in various fields including a Raman amplifier, a dispersion compensating fiber module, and the like. In this case, this optical component (an optical component according to the present invention) includes the optical fiber, a first optical connector attached to one end of the optical fiber, an optical isolator having one end optically connected to the other end of the optical fiber, and a second optical connector attached to the other end of the optical isolator. In order to realize miniaturization, the optical component may include a case which houses the optical fiber and optical isolator.

A Raman amplifier (an optical amplifier according to the present invention) to which the optical fiber is applied includes a supply unit for supplying .pumping light to the optical fiber, in addition to the optical fiber. Note that the Raman amplifier may further include an optical isolator optically connected to one end of the optical fiber.

When Raman amplification is to be performed, there are various forms of supplying pumping light (pumping light of one or more channels having different wavelengths) from the supply unit. More specifically, when backward pumping is to be performed in the Raman amplifier, the supply unit includes a structure for supplying, to the optical fiber prepared as a Raman amplification optical fiber, pumping light for Raman amplification which propagates in a direction opposite to the propagating direction of signal light (signal light of one or more channels having different wavelengths). When forward pumping is to be performed, the supply unit includes a structure for supplying, to the optical fiber prepared as a Raman amplification optical fiber, pumping light for Raman amplification which propagates in the same direction as the propagating direction of signal light. When bidirectional pumping is to be performed, the supply unit includes a structure for supplying, to the optical fiber prepared as a Raman amplification optical fiber, pumping light for Raman amplification which propagates in a direction opposite to the propagating direction of signal light, and also supplying, to the optical fiber, pumping light for Raman amplification which propagates in the same direction as the propagating direction of signal light.

More specifically, the dispersion compensating fiber module according to the present invention is a dispersion compensating fiber module for compensating for a chromatic dispersion in an optical transmission line through which signal light propagates, and includes an input terminal, output terminal, dispersion compensating optical fiber, and Raman amplification optical fiber (an optical fiber according to the present invention which has the above structure). The above input terminal is prepared to receive signal light (WDM signal light) of one or more channels having different wavelengths. The above output terminal is prepared to output signal light. The above dispersion compensating optical fiber is disposed on an optical path between the input terminal and the output terminal, and has a chromatic dispersion whose sign is different from that of a chromatic dispersion in an optical transmission line in a signal wavelength band. The above Raman amplification optical fiber is disposed on the optical path between the input terminal and the output terminal, and has an FOM Raman of 8 (1/dB/W) or more with respect to signal light having the wavelength of 1,650 nm when pumping light having the wavelength of 1,550 nm is supplied, and a chromatic dispersion which is 1/2 or less that of the dispersion compensating optical fiber at the wavelength of 1,650 nm and 10 ps/nm/km to 50 ps/nm/km in absolute value.

Note that above Raman amplification optical fiber may be disposed between the dispersion compensating optical fiber and the output terminal. When backward pumping is to be performed in this arrangement in particular, if an optical isolator is disposed between the dispersion compensating optical fiber and the Raman amplification optical fiber, signal light passing through the dispersion compensating optical fiber is guided to the Raman amplification optical fiber via the optical isolator. On the other hand, pumping light passing through the Raman amplification optical fiber and reflected light components produced in the Raman amplification optical fiber are blocked by the optical isolator. In addition, the Raman amplification optical fiber may be disposed between the input terminal and the dispersion compensating optical fiber. The above dispersion compensating optical fiber may include first and second dispersion compensating optical fibers, and the optical fiber may be disposed between the first and second dispersion compensating optical fibers.

A dispersion compensating fiber module according to the present invention includes at least a dispersion compensating optical fiber and a case which houses the dispersion compensating optical fiber, and may further include a structure which allows a constituent element to be easily added or omitted. The above case includes a first connector for receiving signal light from an optical transmission line, and a second connector for sending out signal light to the optical transmission line. One end of the dispersion compensating optical fiber housed in the case is optically coupled to the first connector, and a third connector having a structure that can be coupled to the second connector is attached to the other end of the dispersion compensating optical fiber.

With the above structure, when Raman amplification is not performed in the dispersion compensating fiber module, the third connector attached to the other end of the dispersion compensating optical fiber may be coupled to the second connector of the case. When Raman amplification is to be performed in the dispersion compensating fiber module, a Raman amplification optical fiber having fourth and fifth connectors attached to its two ends is prepared, and the fourth connector attached to one end of the Raman amplification optical fiber is coupled to the third connector attached to the other end of the dispersion compensating optical fiber. In addition, the fifth connector attached to the other end of the Raman amplification optical fiber is coupled to the second connector of the case, thereby allowing the Raman amplification optical fiber to be easily disposed between the dispersion compensating optical fiber and the output terminal (corresponding to the second connector) of the dispersion compensating fiber module.

Assume that both the Raman amplification optical fiber and the dispersion compensating optical fiber are to be housed in the case of the dispersion compensating fiber module. In this case, in order to miniaturize the dispersion compensating fiber module, it is preferable that the Raman amplification optical fiber be wound in the form of a coil first, and then the dispersion compensating optical fiber be wound in the form of a coil around the Raman amplification optical fiber wound in the form of a coil. This is because the Raman amplification optical fiber having a high nonlinear coefficient is more resistant to a bending loss than the dispersion compensating optical fiber, and hence can be wound into a smaller diameter.

An optical communication system according to the present invention may include an optical transmission line for transmitting signal light and the above dispersion compensating fiber module having a structure which can realize different connection forms depending on whether Raman amplification is to be done or not.

BRIEF DESCRIPTION OF THE DRAWINGS

Fig. 1 is a view showing the schematic arrangement of an optical communication system according to the present invention;

Fig. 2 is a view showing the arrangement of the first embodiment of a dispersion compensating fiber module according to the present invention;

Fig. 3 is a view showing the arrangement of the second embodiment of the dispersion compensating fiber module according to the present invention;

Fig. 4 is a view showing the arrangement of the third embodiment of the dispersion compensating fiber module according to the present invention;

Figs. 5A and 5B are views showing the arrangement of the first embodiment of a fiber module that can be applied to the dispersion compensating fiber module according to the present invention;

Fig. 6 is a view showing the arrangement of the second embodiment of the fiber module that can be applied to the dispersion compensating fiber module according to the present invention;

Fig. 7 is a view showing the arrangement of the third embodiment of the fiber module that can be applied to the dispersion compensating fiber module according to the present invention;

Figs. 8A and 8B are a sectional view showing the structure of an optical fiber according to the present invention and its refractive index profile;

Fig. 9A is a perspective view for explaining a mounted state of a dispersion compensating optical fiber in the dispersion compensating fiber module according to the present invention, and Fig. 9B is a perspective view for explaining a mounted state of an optical component according to the present invention which can be applied to the dispersion compensating fiber module shown in Fig. 9A;

Figs. 10A and 10B are a plan view and sectional view for explaining a mounted state of a dispersion compensating optical fiber and Raman amplification optical fiber (included in optical fibers according to the present invention);

Fig. 11 is a table showing specifications of dispersion compensating optical fibers and Raman amplification optical fibers which can be applied to the dispersion compensating fiber module according to the present invention;

Fig. 12 is a graph showing the relationship between the required power of pumping light and the length of an optical transmission line in embodiment samples and comparative example samples of dispersion compensating fiber modules;

Fig. 13 is a graph showing the relationship between the required recovery amount of pumping light power and the length of an optical transmission line in dispersion compensating fiber modules according to embodiment samples with respect to a comparative example sample;

Fig. 14 is a graph showing noise figure characteristics (NF) in forward pumping (pumping in the forward direction) and backward pumping (pumping in the backward direction);

Fig. 15 is a graph showing relative intensity noise characteristics (RIN) in forward pumping (pumping in the forward direction) and backward pumping (pumping in the backward direction);

Fig. 16 is a graph showing the relationship between the power of pumping light and the effective gain in the dispersion compensating fiber module; and

Fig. 17 is a graph showing the relationship between the noise figure and the effective gain in the dispersion compensating fiber module.

DETAILED DESCRIPTION OF THE PREFERRED EMBODIMENTS

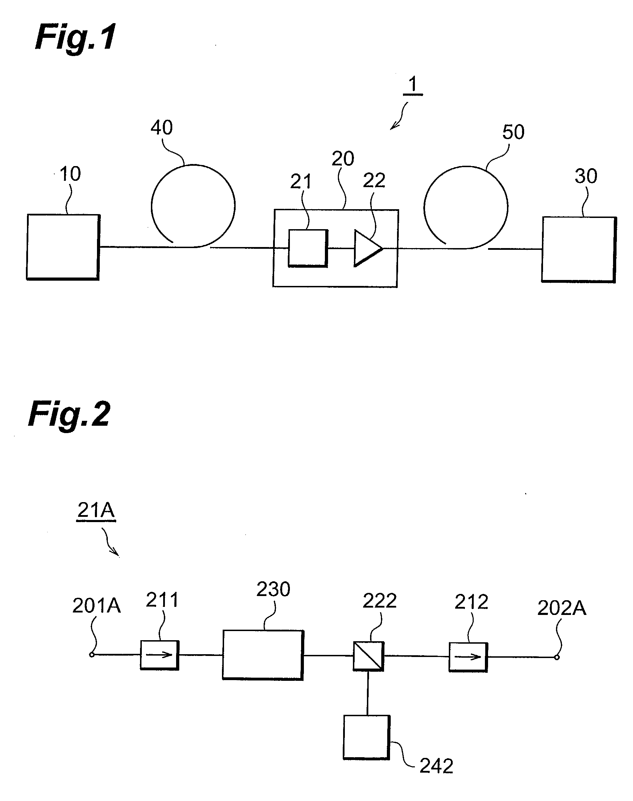

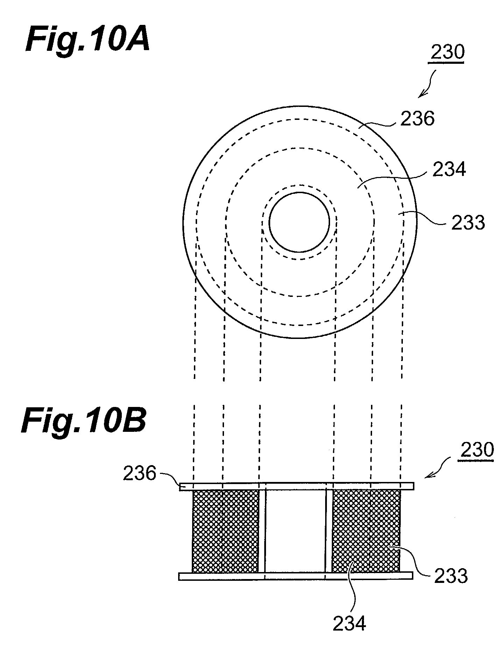

Each embodiment of an optical fiber, optical component, dispersion compensating fiber module, and optical communication system according to the present invention will be described in detail below with reference to Figs. 1 to 4, Figs. 5A and 5B, Figs. 6 and 7, Fig. 8A to 10B, and Figs. 11 to 17. The same reference numerals denote the same parts throughout the drawings, and a repetitive description thereof will be avoided.

Fig. 1 is a view showing the schematic arrangement of an optical communication system according to the present invention. An optical communication system 1 includes an optical transmitter 10, optical repeater 20, and optical receiver 30. An optical transmission line 40 is laid between the optical transmitter 10 and the optical repeater 20. An optical transmission line 50 is laid between the optical repeater 20 and the optical receiver 30. The optical repeater 20 incorporates a dispersion compensating fiber module 21. and optical amplifier 22 according to the present invention.

The optical transmitter 10 sends out signal light (multiplexed signal light) of a plurality of channels having different wavelengths to the optical transmission line 40. The dispersion compensating fiber module 21 in the optical repeater 20 receives the signal light having reached via the optical transmission line 40. The dispersion compensating fiber module 21 then performs dispersion compensation of the signal light and Raman-amplifies it. The optical amplifier 22 includes an optical fiber doped with a rare-earth element (e.g., an Er element) as an optical amplification medium. The signal light output from the dispersion compensating fiber module 21 is amplified in the optical amplification medium by supplying pumping light for pumping the rare-earth element to the optical amplification medium. The amplified signal light is sent out to the optical transmission line 50. The optical receiver 30 receives the multiplexed signal light having reached through the optical transmission line 50, and demultiplexes the multiplexed signal light into light components of the respective channels. After demultiplexing, light of each channel is received by the optical receiver 30. Each of the optical transmission lines 40 and 50 is formed from a standard silica-based single-mode optical fiber having a zero dispersion wavelength near a wavelength of 1.3 μm.

The arrangement of the dispersion compensating fiber module 21 included in the optical communication system 1 will be described next with reference to Figs. 2 to 4.

Fig. 2 is a view showing the arrangement of the first embodiment of the dispersion compensating fiber module according to the present invention. A dispersion compensating fiber module 21A shown in Fig. 2 can be applied to the dispersion compensating fiber module 21 in Fig. 1. The dispersion compensating fiber module 21A has an optical isolator 211, fiber unit 230, optical coupler 222, and optical isolator 212 sequentially arranged along a signal light propagation path extending from an input terminal 201A to an output terminal 202A. The dispersion compensating fiber module 21A also includes a pumping light source 242 (pumping light supply unit) connected to the optical coupler 222. The pumping light source 242 and optical coupler 222 implement a structure for supplying pumping light to the fiber unit 230 in the backward direction (backward pumping).

The optical isolators 211 and 212 transmit light in the signal light propagating direction from the input terminal 201A to the output terminal 202A but do not transmit light in the backward direction. The pumping light source 242 outputs pumping light for Raman amplification, and, for example, a semiconductor laser source is suitably used as the pumping light source 242. The optical coupler 222 outputs the pumping light output from the pumping light source 242 to the fiber unit 230, and also outputs the signal light output from the fiber unit 230 to the optical isolator 212.

The fiber unit 230 includes a dispersion compensating optical fiber having a chromatic dispersion whose sign is opposite to that of the chromatic dispersion of the optical transmission line in a signal light wavelength band including a wavelength of 1,650 nm, and an optical fiber optically connected to this dispersion compensating optical fiber. This optical fiber can be used as a Raman amplification optical fiber and preferably has an FOM Raman of 8 (1/dB/W) or more with respect to signal light having a wavelength of 1,650 nm when pumping light having a wavelength of 1,550 nm is supplied, and a chromatic dispersion of 10 ps/nm/km to 50 ps/nm/km in absolute value, preferably 15 ps/nm/km to 40 ps/nm/km in absolute value, and more preferably 20 ps/nm/km to 30 ps/nm/km in absolute value.

The fiber unit 230 performs Raman amplification and dispersion compensation of signal light when the pumping light output from the pumping light source 242 is supplied to the fiber unit 230. Note that when the Raman amplification optical fiber is made of silica glass as a main component, the pumping light wavelength is set to be shorter than the signal light wavelength by 100 nm.

In the dispersion compensating fiber module 21A according to the first embodiment, the pumping light for Raman amplification which is output from the pumping light source 242 is supplied to propagate to the fiber unit 230 in a direction opposite to the signal light propagating direction via the optical coupler 222. On the other hand, the signal light input from the input terminal 201A is subjected to dispersion compensation and Raman amplification in the fiber unit 230. The resultant light is output from the output terminal 202A via the optical coupler 222 and optical isolator 212. Such backward pumping is preferable in that the Raman amplification characteristics are excellent with little influence of intensity noise of pumping light.

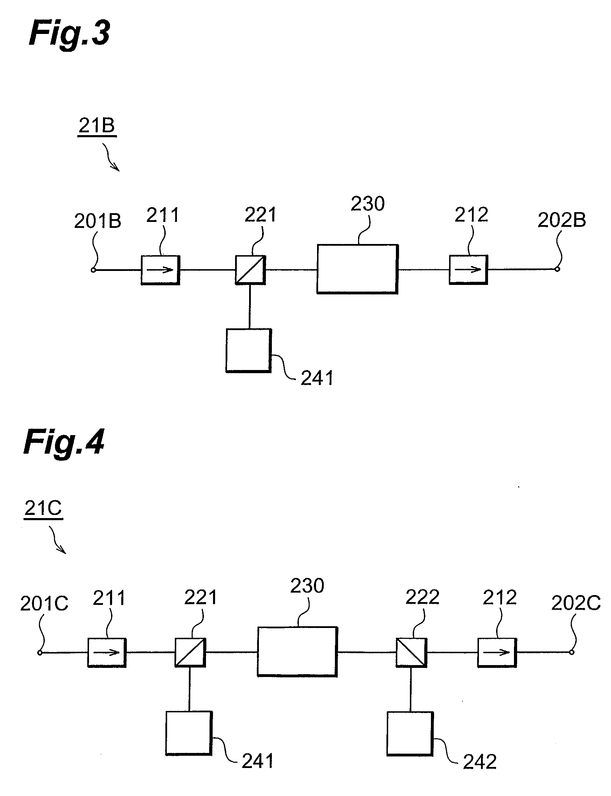

Fig. 3 is a view showing the arrangement of the second embodiment of the dispersion compensating fiber module according to the present invention. A dispersion compensating fiber module 21B shown in Fig. 3 can also be applied as the dispersion compensating fiber module 21 in Fig. 1. This dispersion compensating fiber module 21B has an optical isolator 211, optical coupler 221, fiber unit 230, and optical isolator 212 sequentially arranged along a signal light propagation path extending from an input terminal 201B to an output terminal 202B. The dispersion compensating fiber module 21B also includes a pumping light source 241 (supply unit) connected to the optical coupler 221. The pumping light source 241 and optical coupler 221 supply pumping light to the fiber unit 230 in the forward direction (forward pumping).

The pumping light source 241 outputs pumping light for Raman amplification, and, for example, a semiconductor laser source is suitably used as the pumping light source 241. The optical coupler 221 outputs the pumping light output from the pumping light source 241 to the fiber unit 230, and also outputs the signal light output from the optical isolator 211 to the fiber unit 230. The fiber unit 230 performs Raman amplification and dispersion compensation of signal light when the pumping light output from the pumping light source 241 is supplied to the fiber unit 230.

In this dispersion compensating fiber module 21B, the Raman amplification pumping light output from the pumping light source 241 is supplied to propagate to the fiber unit 230 in the same direction as the signal light propagating direction via the optical coupler 221. On the other hand, the signal light input from the input terminal 201B is input to the fiber unit 230 via the optical isolator 211 and optical coupler 221 and subjected to dispersion compensation and Raman amplification in the fiber unit 230. The resultant light is output from the output terminal 202B via the optical isolator 212. Such forward pumping is preferable in that an increase in noise figure is suppressed.

Fig. 4 is a view showing the arrangement of the third embodiment of the dispersion compensating fiber module according to the present invention. A dispersion compensating fiber module 21C shown in Fig. 4 can also be used as the dispersion compensating fiber module 21 in Fig. 1. This dispersion compensating fiber module 21C has an optical isolator 211, optical coupler 221, fiber unit 230, optical coupler 222, and optical isolator 212 sequentially arranged along the signal light propagation path extending from an input terminal 201C to an output terminal 202C. The dispersion compensating fiber module 21C also includes a pumping light source 241 connected to the optical coupler 221, and a pumping light source 242 connected to the optical coupler 222. In the arrangement shown in Fig. 4, pumping light is supplied to the fiber unit 230 in both the directions, i.e., the forward and backward directions (bidirectional pumping).

In this dispersion compensating fiber module 21C, the Raman amplification pumping light output from the pumping light source 241 is supplied to propagate to the fiber unit 230 in the same direction as the signal light propagating direction via the optical coupler 221. The Raman amplification pumping light output from the pumping light source 242 is supplied to propagate to the fiber unit 230 in a direction opposite to the signal light propagating direction via the optical coupler 222. The signal light input from the input terminal 201C is input to the fiber unit 230 via the optical isolator 211 and optical coupler 221 and subjected to dispersion compensation and Raman amplification in the fiber unit 230. The resultant light is output from the output terminal 202C via the optical coupler 222 and optical isolator 212. Such bidirectional pumping is preferable in that the influence of intensity noise of pumping light is small and an increase in noise figure is suppressed.

In each of the arrangements shown in Figs. 2 to 4, the installation of the optical isolator 211 on the input terminal side prevents the propagation of pumping light and unnecessary scattered light from the input terminal to the upstream side. In addition, the installation of the optical isolator 212 on the output terminal side prevents the propagation of noise light from the output terminal to the downstream side. Each of the optical couplers 221 and 222 may have an arrangement including a dielectric multilayer filter, an arrangement including an optical circulator, an arrangement including an optical circulator and optical fiber grating, or an arrangement including a fiber coupler.

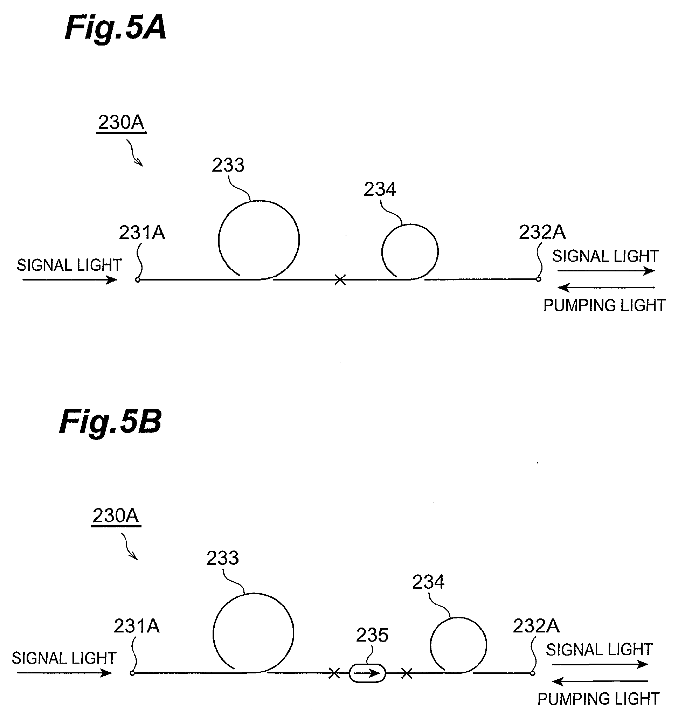

The arrangement of the fiber unit 230 included in the dispersion compensating fiber module 21 (21A to 21C) according to the present invention will be described next with reference to Figs. 5A, 5B, 6, and 7.

Figs. 5A and 5B are views showing the arrangement of the first embodiment of a fiber unit. A fiber unit 230A shown in Figs. 5A and 5B can be used as the fiber unit 230 of each of the dispersion compensating fiber modules 21A to 21C shown in Figs. 2 to 4. This fiber unit 230A has a dispersion compensating optical fiber 233 and Raman amplification optical fiber 234 sequentially arranged along a signal light propagation path extending from an input terminal 231A to an output terminal 232A. End faces of the dispersion compensating optical fiber 233 and Raman amplification optical fiber 234 are fusion-spliced to each other. In the fiber unit 230A, the signal light input from the input terminal 231A is dispersion-compensated by the dispersion compensating optical fiber 233, and Raman-amplified by the Raman amplification optical fiber 234. The resultant signal light is output from the output terminal 232A. The arrangement shown in Figs. 5A and 5B is suitable for backward pumping in that the gain of Raman amplification is high because pumping light is input first to the Raman amplification optical fiber 234. As shown in Fig. 5B, in particular, the arrangement in which an optical isolator 235 is disposed between the dispersion compensating optical fiber 233 and the Raman amplification optical fiber 234 is more preferable in that pumping light passing through the Raman amplification optical fiber 234 does not reach the dispersion compensating optical fiber 233.

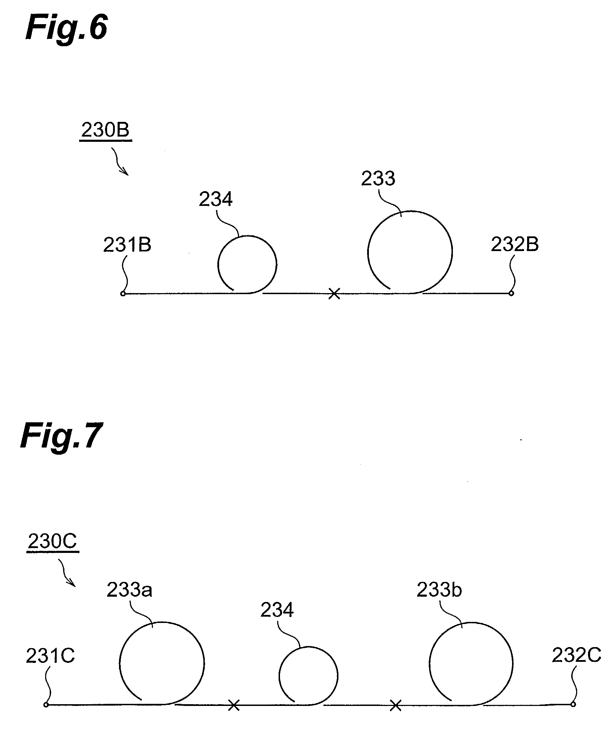

Fig. 6 is a view showing the arrangement of the second embodiment of the fiber module. A fiber unit 230B shown in Fig. 6 can also be used as the fiber unit 230 of each of the dispersion compensating fiber modules 21A to 21C shown in Figs. 2 to 4. This fiber unit 230B has a Raman amplification optical fiber 234 and dispersion compensating optical fiber 233 sequentially arranged along a signal light propagation path extending from an input terminal 231B to an output terminal 232B. End faces of the Raman amplification optical fiber 234 and dispersion compensating optical fiber 233 are fusion-spliced to each other. In this fiber unit 230B, the signal light input from the input terminal 231B is Raman-amplified by the Raman amplification optical fiber 234, and dispersion-compensated by the dispersion compensating optical fiber 233. The resultant signal light is output from the output terminal 232B. This arrangement is preferable in that an increase in noise figure is suppressed.

Fig. 7 is a view showing the arrangement of the third embodiment of the fiber module. A fiber unit 230C shown in Fig. 7 can also be used as the fiber unit 230 of each of the dispersion compensating fiber modules 21A to 21C shown in Figs. 2 to 4. This fiber unit 230C has a dispersion compensating optical fiber 233a, Raman amplification optical fiber 234, and dispersion compensating optical fiber 233b sequentially arranged along a signal light propagation path extending from an input terminal 231C to an output terminal 232C. End faces of the dispersion compensating optical fiber 233a and Raman amplification optical fiber 234 are fusion-spliced to each other. End faces of the Raman amplification optical fiber 234 and dispersion compensating optical fiber 233b are fusion-spliced to each other. In this fiber unit 230C, the signal light input from the input terminal 231C is dispersion-compensated by the dispersion compensating optical fiber 233a, and Raman-amplified by the Raman amplification optical fiber 234. Thereafter, the light signal is further dispersion-compensated by the dispersion compensating optical fiber 233b. The resultant signal light is output from the output terminal 232C. This arrangement is preferable in that the gain of Raman amplification is high and an increase in noise figure is suppressed.

The dispersion compensating optical fiber 233 (233a, 233b) included in the fiber unit 230 (230A to 230C) has a chromatic dispersion whose sign is different from that of a chromatic dispersion in each of optical transmission lines 40 and 50 of an optical communication system 1 (Fig. 1), and compensates for at least the chromatic dispersion of the optical transmission line 40. The dispersion compensating optical fiber 233 can compensate for the chromatic dispersion in the Raman amplification optical fiber 234 and can also Raman-amplify signal light.

The Raman amplification optical fiber 234 included in the fiber unit 230 (230A to 230C) is an optical fiber with high nonlinearity, and is suitable for Raman amplification of signal light. This Raman amplification optical fiber 234 has an FOM Raman of 8 (1/dB/W) or more with respect to signal light having a wavelength of 1,650 nm when pumping light having a wavelength of 1,550 nm is supplied, and a chromatic dispersion of 10 ps/nm/km to 50 ps/nm/km in absolute value, preferably 15 ps/nm/km to 40 ps/nm/km in absolute value, and more preferably 20 ps/nm/km to 30 ps/nm/km in absolute value, at a wavelength of 1,650 nm.

In this case, an FOM Raman is defined by $g_R/A_{eff}/\alpha_p$ where $g_R$ is the Raman gain coefficient, $A_{eff}$ is the effective area, and $\alpha_p$ is the loss at the pumping light wavelength.

In addition, as disclosed in Japanese Patent Laid-Open No. 8-248251 (EP 0 724 171 A2), an effective area ($A_{eff}$) is given by

$$A_{eff} = 2\pi(\int_0^\infty E^2 r dr)^2 / (\int_0^\infty E^4 r dr)$$

where E is the electric field accompanying propagated light, and r is the distance from the core center in the radial direction.

The Raman amplification optical fiber 234 preferably has an effective area $A_{eff}$ of 15 $\mu m^2$ or less at the pumping light wavelength. The Raman amplification optical fiber 234 preferably has a Raman gain coefficient $g_R$ of 0.005 (1/Wm) or more. The Raman amplification optical fiber 234 preferably has a nonlinear coefficient of 20 (1/W/km) or more. In these cases, signal light is effectively Raman-amplified.

The Raman amplification optical fiber 234 has a chromatic dispersion of 10 ps/nm/km to 50 ps/nm/km in absolute value, preferably 15 ps/nm/km to 40 ps/nm/km in absolute value, and more preferably 20 ps/nm/km to 30 ps/nm/km in absolute value, at a wavelength of 1,650 nm. The Raman amplification optical fiber 234 preferably has a dispersion slope of -0.3 $ps/nm^2/km$ to +0.1 $ps/nm^2/km$ at a wavelength of 1,650 nm. In these cases, the dispersion value of the fiber unit 230 can be easily adjusted.

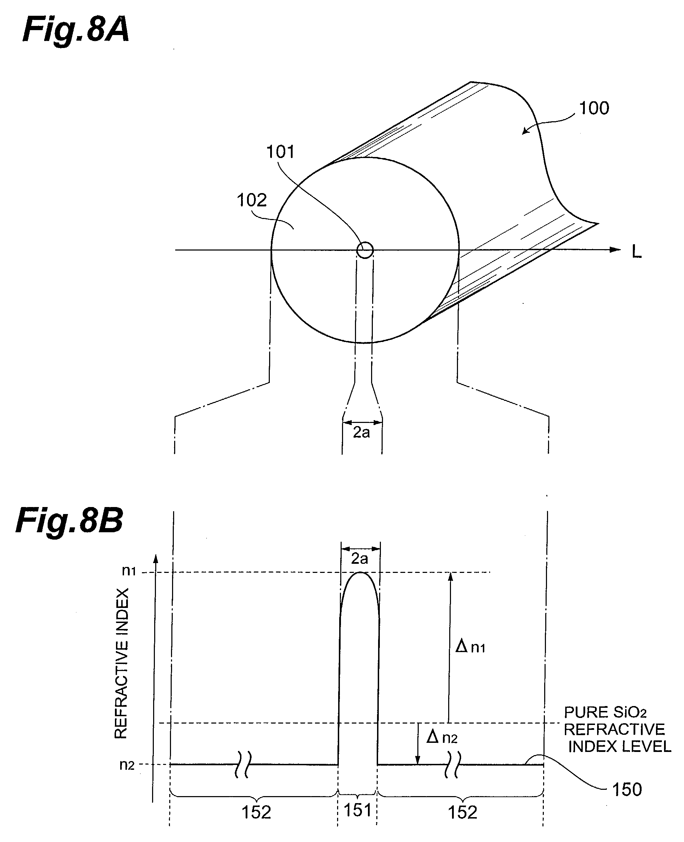

Fig. 8A is a sectional view of an optical fiber (an optical fiber according to the present invention) which can be applied to the Raman amplification optical fiber 234 described above. Fig. 8B shows the refractive index profile of this optical fiber. An optical fiber 100 has a core region 101 (a diameter 2a and a maximum refractive index $n_1$) and a cladding region 102 (refractive index $n_2$) surrounding the core region 101.

A refractive index profile 150 shown in Fig. 8B corresponds to the refractive index of each portion on a line L in Fig. 8A, a region 151 represents the refractive index of the core region 101 on the line L, and a region 152 represents the refractive index of the cladding region 102 on the line L.

The optical fiber 100 described above is formed by using silica glass ($SiO_2$) as a main material, doping the cladding region 102 with, for example, $GeO_2$, and doping the core region 101 with, for example, an F element. In addition, the diameter 2a of the core region 101 is 4.0 $\mu m$. With reference to the refractive index level (no) of pure silica glass, a relative refractive index difference $\Delta n_1$ (= $(n_1 - n_0)/n_0$) of the core region 101 is +2.9%, and a relative refractive index difference $\Delta n_2$ (= $(n_2 - n_0)/n_0$) of the cladding region 102 is -0.4%. In this case, the optical fiber 100 has a chromatic dispersion of -15.0 ps/nm/km, at a wavelength of 1,550 nm, a dispersion slope of 0.01 $ps/nm^2/km$, and an effective area of 9.9 $\mu m^2$. The optical fiber 100 also has a nonlinear coefficient of 22.3 (1/W/km) and a Raman gain coefficient of 0.007 (1/Wm).

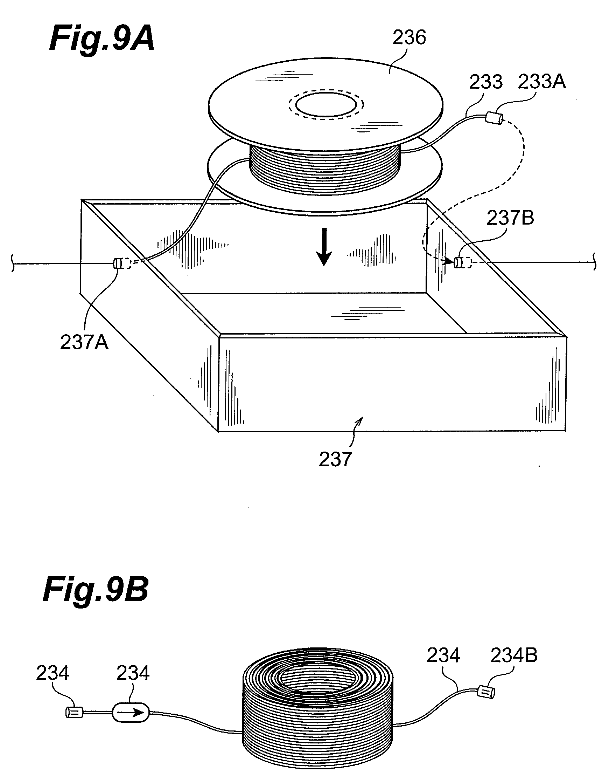

Fig. 9A is a perspective view for explaining a mounted state of the dispersion compensating optical fiber 233 in the dispersion compensating fiber module according to the present invention. Fig. 9B is a perspective view showing a mounted state of an optical component according to the present invention which can be applied to the dispersion compensating fiber module shown in Fig. 9A.

Referring to Fig. 9A, the dispersion compensating fiber module includes a case 237 and a dispersion compensating optical fiber 233 which is housed in the case 237 while being wound around a bobbin 236. The case 237 has a first connector 237A for receiving signal light from an optical transmission line and a second connector 237B for sending out signal light to the optical transmission line. One end of the dispersion compensating optical fiber 233 having a chromatic dispersion whose sign is opposite to that of the chromatic dispersion of the optical transmission line is optically coupled to the first connector 237A. A third connector 233A having a structure that can be coupled to the second connector 237B is attached to the other end of the dispersion compensating optical fiber 233.

If there is no need to perform Raman amplification in this dispersion compensating fiber module, the third connector 233A attached to the other end of the dispersion compensating optical fiber 233, is directly coupled to the second connector 237B.

If Raman amplification is performed in this dispersion compensating fiber module, the optical component shown in Fig. 9B (including an optical fiber according to the present invention as a Raman amplification optical fiber) is disposed between the second connector 237B and the third connector 233A of the dispersion compensating optical fiber 233. This optical component includes the Raman amplification optical fiber 234 and an optical isolator 235 having one end optically connected to one end of the Raman amplification optical fiber 234. In order to allow the optical component to be applied to the dispersion compensating fiber module shown in Fig. 9A, a fourth connector 234A is attached to the other end of the optical isolator 235, and a fifth connector 234B is attached to the other end of the Raman amplification optical fiber 234. When the dispersion compensating optical fiber 233 and Raman amplification optical fiber 234 are to be housed in the case 237, the third connector 233A of the dispersion compensating optical fiber 233 is directly coupled to the fourth connector of the optical component, and the second connector 237B of the case 237 is directly coupled to the fifth connector 234B of the optical component.

As described above, both the dispersion compensating optical fiber 233 and Raman amplification optical fiber 234 included n the fiber unit 230 are preferably wound in the form of coils. This is because the fiber unit 230 itself can be made compact. When the fiber unit 230 constituted by the dispersion compensating optical fiber 233 and Raman amplification optical fiber 234 is to be wound around one bobbin 236, in particular, it is preferable that the Raman amplification optical fiber 234 be wound in the form of a coil, and the dispersion compensating optical fiber 233 be wound around the wound Raman amplification optical fiber 234 in the form of a coil. This is because the Raman amplification optical fiber 234 is generally more resistant to a bending loss than the dispersion compensating optical fiber 233, and hence can be wound into a smaller diameter.

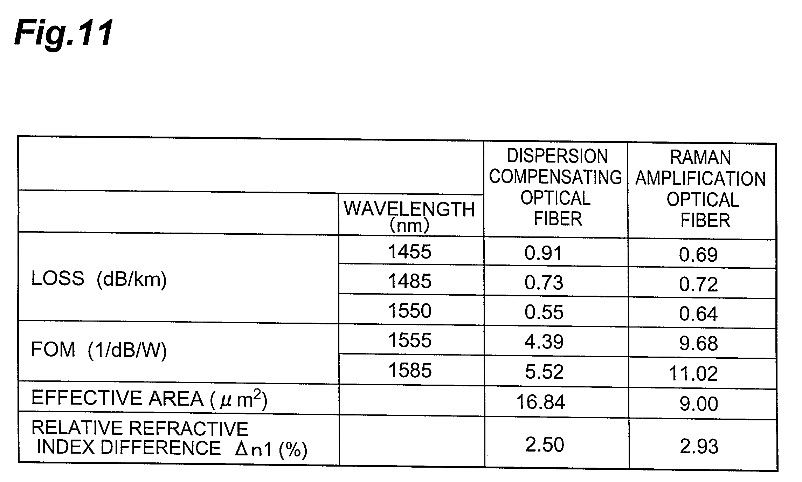

A plurality of samples of the dispersion compensating fiber module 21 according to the present invention will be described next. Assume that in each prepared sample, signal light of 201 channels at frequency intervals of 50 GHz included in a wavelength band of 1,530 nm to 1,610 nm propagates through the optical transmission line 40 formed from a standard single-mode optical fiber and is input to the dispersion compensating fiber module 21 in the repeater 20. Fig. 11 shows a table indicating specifications of dispersion compensating optical fibers and Raman amplification optical fibers which can be applied to the dispersion compensating fiber module 21.

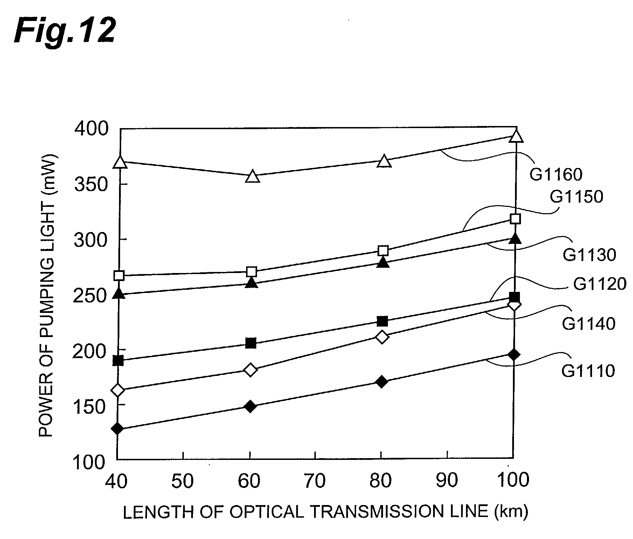

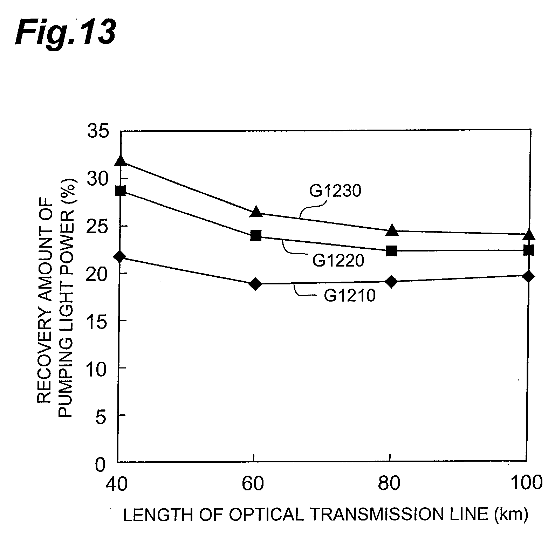

Fig. 12 is a graph showing the relationship between the required power of pumping light and the length of an optical transmission line in each of dispersion compensating fiber modules as embodiment samples and comparative example samples. Fig. 13 is a graph showing the relationship between the required recovery amount of pumping light power and the length of an optical transmission line in each dispersion compensating fiber module as an embodiment sample with respect to a comparative example sample. In this case, the dispersion compensating fiber module has an arrangement for backward pumping in Fig. 2, and the fiber unit has the arrangement shown in Fig. 5A. In an embodiment sample, the length of a dispersion compensating optical fiber is so set as to compensate for a chromatic dispersion in an optical transmission line, and a Raman amplification optical fiber has a length of 3 km. A comparative example sample includes only a dispersion compensating optical fiber without including any Raman amplification optical fiber.

Referring to Fig. 12, a curve G1110 indicates the relationship between the power of pumping light and the length of an optical transmission line when an effective gain (G) of a dispersion compensating fiber module as an embodiment sample becomes 0 dB; a curve G1120 indicates the same when the effective gain (G) of a dispersion compensating fiber module as an embodiment sample becomes 3 dB; and a curve G1130 indicates the same when the effective gain (G) of a dispersion compensating fiber module as an embodiment sample becomes 6 dB. In addition, a curve G1140 indicates the relationship between the power of pumping light and the length of an optical transmission line when the effective gain (G) of a dispersion compensating fiber module as a comparative example sample becomes 0 dB; a curve G1150 indicates the same when the effective gain (G) of a dispersion compensating fiber module as a comparative example sample becomes 3 dB; and a curve G1160 indicates the same when the effective gain (G) of a dispersion compensating fiber module as a comparative example sample becomes 6 dB. Referring to Fig. 13, a curve G1210 indicates a recovery amount in an embodiment sample with respect to a comparative example sample at a gain of 0 dB; a curve G1220, a recovery amount in an embodiment sample with respect to a comparative example sample at a gain of 3 dB; and a curve G1230, a recovery amount in an embodiment sample with respect to a comparative example sample at a gain of 6 dB.

As is obvious from Figs. 12 and 13, as compared with the comparative example samples including only the dispersion compensating optical fibers, in the embodiment samples including the Raman amplification optical fibers in addition to the dispersion compensating optical fibers, the required powers of pumping light were as low as 100 mW at maximum, and the required recovery amounts of pumping light powers were about 20% to 30%.

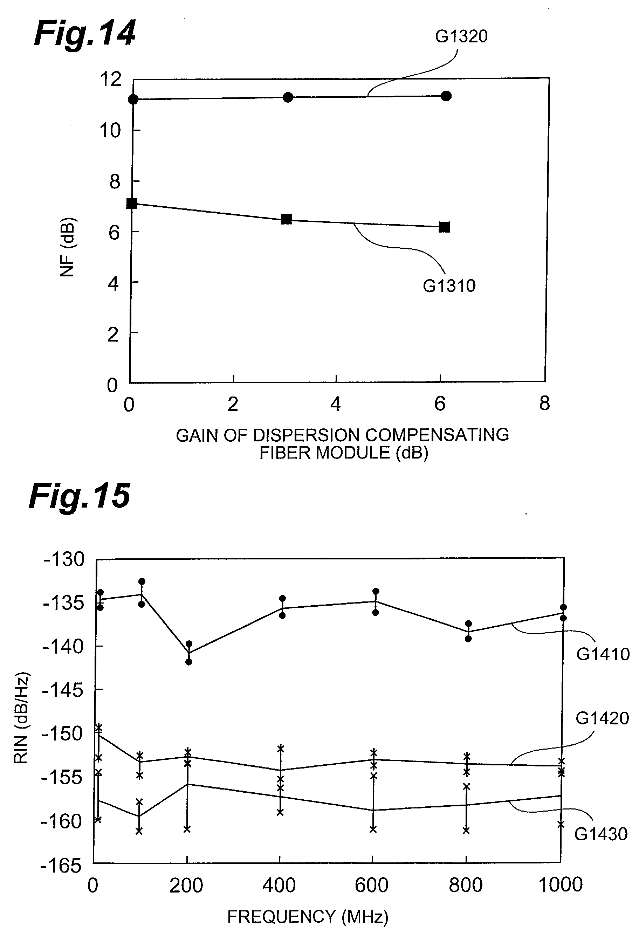

Fig. 14 is a graph showing NF (Noise Figure) characteristics in forward pumping (curve G1320) and backward pumping (curve G1310). Fig. 15 is a graph showing RIN (Relative Intensity Noise) characteristics in forward pumping (curve G1410) and backward pumping (curve G1420). Referring to Fig. 15, a curve G1430 indicates a relative intensity noise characteristic without pumping. The arrangement shown in Fig. 3 was used for a dispersion compensating fiber module in the case of forward pumping, whereas the arrangement shown in Fig. 2 was used in the case of backward pumping. In addition, the arrangement shown in Fig. 5A was used for a fiber unit. As is obvious from Figs. 14 and 15, forward pumping is superior in terms of noise figure, and the influence of relative intensity noise of a pumping light source is smaller in backward pumping.

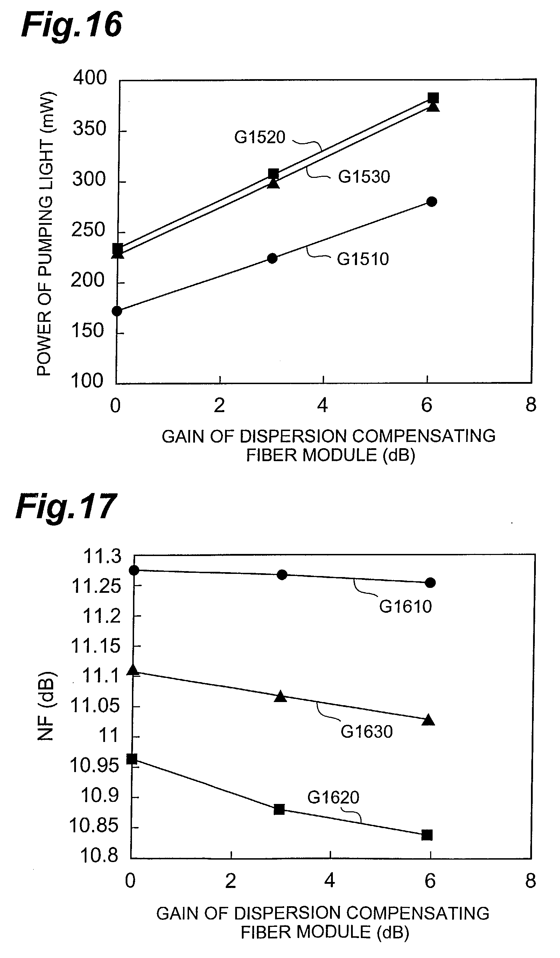

Fig. 16 is a graph showing the relationship between the power of pumping light and the effective gain in dispersion compensating fiber modules. Fig. 17 is a graph showing the relationship between the noise figure (NF) and the effective gain in dispersion compensating fiber modules.

Referring to Fig. 16, a curve G1510 indicates the relationship between the power of pumping light and the effective gain in a dispersion compensating fiber module formed from the fiber unit shown in Fig. 5A and has the backward pumping structure shown in Fig. 2; a curve G1520 indicates the same in a dispersion compensating fiber module formed from the fiber unit shown in Fig. 6 and has the backward pumping structure shown in Fig. 2; and a curve G1530 indicates the same in a dispersion compensating fiber module formed from the fiber unit shown in Fig. 7 and has the backward pumping structure shown in Fig. 2. Referring to Fig. 17, a curve G1610 indicates the relationship between the noise figure and the effective gain in the dispersion compensating fiber module formed from the fiber unit shown in Fig. 5A and has the backward pumping structure shown in Fig. 2; a curve G1620 indicates the same in the dispersion compensating fiber module formed from the fiber unit shown in Fig. 6 and has the backward pumping structure shown in Fig. 2; and a curve G1630 indicates the same in the dispersion compensating fiber module formed from the fiber unit shown in Fig. 7 and has the backward pumping structure shown in Fig. 2.

As is obvious from Figs. 16 and 17, when a Raman amplification optical fiber is disposed on the output stage of a dispersion compensating optical fiber (Fig. 5A), the required power of pumping light is low, and the pumping efficiency is excellent. When a dispersion compensating optical fiber is disposed on the output stage of a Raman amplification optical fiber (Fig. 6), the resultant arrangement is excellent in terms of noise figure. When a Raman amplification optical fiber is disposed between the first dispersion compensating optical fiber and the second dispersion compensating optical fiber (Fig. 7), the resultant arrangement has intermediate characteristics between those indicated by Figs. 5A and 6.

As has been described above, according to the present invention, since a fiber unit that can be applied to a dispersion compensating fiber module includes an optical fiber that can be used as a Raman amplification optical fiber, signal light is Raman-amplified by the optical fiber, if pumping light for Raman amplification is supplied as needed, as well as being dispersion-compensated. In addition, the signal light is also dispersion-compensated in the dispersion compensating optical fiber included in the dispersion compensating fiber module. With this arrangement, the pumping efficiency in Raman amplification is greatly improved.

**Claims**

1.  An optical fiber having the following characteristics of:

    an FOM Raman of 8 (1/dB/W) or more with respect to signal light having a wavelength of 1,650 nm when pumping light having a wavelength of 1,550 nm is supplied; and
    a chromatic dispersion having an absolute value of 10 ps/nm/km to 50 ps/nm/km at a wavelength of 1,650 nm.

2.  An optical fiber according to claim 1, wherein the absolute value of the chromatic dispersion at the wavelength of 1,650 nm is 15 ps/nm/km to 40 ps/nm/km.

3.  An optical fiber according to claim 2, wherein the absolute value of the chromatic dispersion at the wavelength of 1,650 nm is 20 ps/nm/km to 30 ps/nm/km.

4.  An optical fiber according to claim 1, further having an effective area of 15 $\mu$m$^2$ or less with respect to light having the wavelength of 1,550 nm.

5.  An optical fiber according to claim 1, further having a Raman gain coefficient of 0.005 (1/Wm) or more.

6.  An optical fiber according to claim 1, further having a nonlinear coefficient of 20 (1/W/km) or more.

7.  An optical fiber according to claim 1, further having a dispersion slope of -0.3 ps/nm$^2$/km to +0.1 ps/nm$^2$/km at a center wavelength in a signal wavelength band.

8.  A dispersion compensating fiber module which compensates for a chromatic dispersion of an optical transmission line through which signal light propagates, comprising:

    a dispersion compensating optical fiber having a chromatic dispersion whose sign is opposite to that of the chromatic dispersion of said optical transmission line in a signal wavelength band; and
    a Raman amplification optical fiber according to claim 1.

9.  An optical communication system comprising:

    an optical transmission line for transmitting signal light; and
    a dispersion compensating fiber module according to claim 8 which performs dispersion compensation of the signal light.

10. A Raman amplifier comprising:

    an optical fiber according to claim 1; and
    a supply unit for supplying pumping light to said optical fiber.

11. An amplifier according to claim 10, further comprising an optical isolator optically connected to one end of said optical fiber.

12. An optical component comprising:

    an optical fiber according to claim 1;
    a first optical connector attached to one end of said optical fiber;
    an optical isolator having one end optically connected to the other end of said optical fiber; and
    a second optical connector attached to the other end of said optical isolator.

13. A component according to claim 12, further comprising a case which houses said optical fiber and said optical isolator.

14. A dispersion compensating fiber module which compensates for a chromatic dispersion of an optical transmission line through which signal light propagates, comprising:

    an input terminal for receiving the signal light;
    an output terminal for outputting the signal light;
    a dispersion compensating optical fiber disposed on an optical path between said input terminal and said output terminal, said dispersion compensating optical fiber having a chromatic dispersion whose sign is opposite to that of the chromatic dispersion of said optical transmission line in a signal wavelength band; and
    a Raman amplification optical fiber disposed on the optical path between said input terminal and said output terminal, said Raman amplification optical fiber having the following characteristics of:

an FOM Raman of 8 (1/dB/W) or more with respect to signal light having a wavelength of 1,650 nm when pumping light having a wavelength of 1,550 nm is supplied, and a chromatic dispersion having an absolute value of 1/2 or less that of said dispersion compensating optical fiber at the wavelength of 1,650 nm and 10 ps/nm/km to 50 ps/nm/km.

15. A module according to claim 14, wherein said Raman amplification optical fiber has the chromatic dispersion with the absolute value of 15 ps/nm/km to 40 ps/nm/km at the wavelength of 1,650 nm.

16. A module according to claim 14, wherein said Raman amplification optical fiber has the chromatic dispersion with the absolute value of 20 ps/nm/km to 30 ps/nm/km at the wavelength of 1,650 nm.

17. A module according to claim 14, wherein said Raman amplification optical fiber has an effective area of 15 $\mu m^2$ or less with respect to light having the wavelength of 1,550 nm.

18. A module according to claim 14, wherein said Raman amplification optical fiber has a Raman gain coefficient of 0.005 (1/Wm) or more.

19. A module according to claim 14, wherein said Raman amplification optical fiber has a nonlinear coefficient of 20 (1/W/km) or more.

20. A module according to claim 14, wherein said Raman amplification optical fiber has a dispersion slope of -0.3 ps/nm$^2$/km to +0.1 ps/nm$^2$/km at a center wavelength in a signal wavelength band.

21. A dispersion compensating fiber module for compensating for a chromatic dispersion in an optical transmission line, through which signal light propagates, in a signal wavelength band, comprising:

a case having a first connector for receiving the signal light from the optical transmission line, and a second connector for sending out the signal light to said optical transmission line; and a dispersion compensating optical fiber which is housed in said case and has a chromatic dispersion whose sign is opposite to that of the chromatic dispersion of said optical transmission line, said dispersion compensating optical fiber having one end optically coupled to said first connector, and the other end to which a third connector having a structure that can be coupled to said second connector is attached.

22. A module according to claim 21, further comprising a Raman amplification optical fiber housed in said case and having two ends to which fourth and fifth connectors are attached,
said fourth connector attached to one end of said Raman amplification optical fiber being coupled to said third connector attached to the other end of said dispersion compensating optical fiber, and said fifth connector attached to the other end of said Raman amplification optical fiber being coupled to said second connector of said case.

23. A module according to claim 16, wherein said Raman amplification optical fiber is wound in the form of a coil, and said dispersion compensating optical fiber is wound in the form of a coil on an outer periphery of said Raman amplification optical fiber wound in the form of a coil.

24. An optical communication system comprising:

an optical transmission line for transmitting signal light; and
a dispersion compensating fiber module according to claim 14 which performs dispersion compensation of the signal light.

25. An optical communication system comprising:

an optical transmission line for transmitting signal light; and
a dispersion compensating fiber module for compensating for a chromatic dispersion in said optical transmission line, said dispersion compensating fiber module including:

a case having a first connector for receiving the signal light from the optical transmission line, and a second connector for sending out the signal light to the optical transmission line, and
a dispersion compensating optical fiber which is housed in said case and has a chromatic dispersion whose sign is opposite to that of the chromatic dispersion of said optical transmission line, said dispersion compensating optical fiber having one end optically coupled to said first connector, and the other end to which a third connector is attached,
said second and third connectors having structures that allow said connectors to be directly coupled to each other and optically connected to each other via a Raman amplification optical fiber.

# Fig.1

# Fig.2

# Fig.3

21B

201B  211  221  230  212  202B

241

# Fig.4

21C

201C  211  221  230  222  212  202C

241  242

## Fig.5A

## Fig.5B

**Fig.6**

230B

234

233

231B

232B

**Fig.7**

230C

233a

234

233b

231C

232C

## Fig.8A

## Fig.8B

## Fig.9A

## Fig.9B

**Fig.10A**

**Fig.10B**

# Fig.11

| | WAVELENGTH (nm) | DISPERSION COMPENSATING OPTICAL FIBER | RAMAN AMPLIFICATION OPTICAL FIBER |
|---|---|---|---|
| LOSS (dB/km) | 1455 | 0.91 | 0.69 |
| | 1485 | 0.73 | 0.72 |
| | 1550 | 0.55 | 0.64 |
| FOM (1/dB/W) | 1555 | 4.39 | 9.68 |
| | 1585 | 5.52 | 11.02 |
| EFFECTIVE AREA ($\mu m^2$) | | 16.84 | 9.00 |
| RELATIVE REFRACTIVE INDEX DIFFERENCE $\Delta n1$ (%) | | 2.50 | 2.93 |

EP 1 343 033 A2

*Fig.12*

*Fig.13*

## Fig.14

## Fig.15

## Fig.16

## Fig.17